# EUROPEAN PATENT APPLICATION

(11) **EP 4 818 546 A1**
(43) Date of publication of application: **07.10.2026**
(21) Application number: 26164958.6
(22) Date of filing: 16.03.2026
(51) Int. Cl.: F16F 15/131, F16F 15/12

(54) **DAMPER DEVICE**

(30) Priority: 21.03.2025 JP 2025046709
(71) Applicant: AISIN CORPORATION, Kariya, Aichi 448-8650 (JP)
(72) Inventor: HAMAGUCHI, Toru, Aichi, 448-8650 (JP); OSUMI, Tomoya, Aichi, 448-8650 (JP); SUZUKI, Masanori, Aichi, 448-8650 (JP); HAYASHI, Daisuke, Aichi, 448-8650 (JP)
(74) Representative: Kramer Barske Schmidtchen Patentanwälte PartG mbB

(57) **Abstract**

A damper device (1) includes a first rotating member (10) receiving power of an engine and rotatable around a rotational axis (I), a second rotating member (20) rotatable around the rotational axis (I) relative to the first rotating member (10), and a coil spring (40) compressed between the first rotating member (10) and the second rotating member. The first rotating member (10) includes a plate member (100), an annular member (300), and an elastic body (60). The plate member (100) rotates integrally with an engine-side member (4). When viewed in the axial direction, the annular member (300) has an annular shape around the rotational axis (I). The annular member (300) is coupled to the plate member (100). The elastic body (60) is provided between the plate member (100) and the annular member (300) in the axial direction, and has elasticity in the axial direction.

## Description

### TECHNICAL FIELD

This disclosure generally relates to a damper device.

### BACKGROUND DISCUSSION

A known damper device includes a coil spring to be compressed between two rotating members arranged in an axial direction, and damps an engine output and transmits the damped output to wheels. Such a damper device is disclosed in JP 2015-161371A (Reference 1), for example.

In this type of damper device, inertia is maintained by an annular member provided at an outer peripheral portion of the rotating member on an engine side. Mass of the annular member affecting the inertia is one of parameters that determine a natural frequency of the damper device.

In the above-described conventional technique, the natural frequency of the damper device can be adjusted based on the mass of the annular member. However, due to a constraint on an arrangement space for the annular member, there is a problem that an adjustment range of the natural frequency cannot be efficiently increased.

A need thus exists for a damper device that can efficiently increase an adjustment range of a natural frequency.

### SUMMARY

According to one aspect, there is provided a damper device that includes a first rotating member, a second rotating member, and a coil spring. Power of an engine is input to the first rotating member, and thus the first rotating member is rotatable around a rotational axis extending in an axial direction. The second rotating member is rotatable around the rotational axis relative to the first rotating member. The coil spring is compressed between the first rotating member and the second rotating member. The first rotating member includes a plate member, an annular member, and an elastic body. The plate member rotates integrally with an engine-side member. When viewed in the axial direction, the annular member has an annular shape around the rotational axis. The annular member is coupled to the plate member. The elastic body is provided between the plate member and the annular member in the axial direction, and has elasticity in the axial direction.

According to one aspect, an adjustment range of a natural frequency can be efficiently increased.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a sectional view of a damper device according to this embodiment;
FIG. 2 is an illustration diagram of a hemmed bend structure of an attachment portion;
FIG. 3 is an enlarged view of a portion Q3 in FIG. 1;
FIG. 4 illustrates one example of a property of an elastic body;
FIG. 5 illustrates a manner in which a natural frequency is changed (adjusted) in an increasing direction;
FIG. 6 illustrates a manner in which the natural frequency is changed (adjusted) in a decreasing direction;
FIG. 7 illustrates another example of a property of the elastic body; and
FIG. 8 is an illustration diagram of a damper device according to a modified example.

### DETAILED DESCRIPTION

The following describes respective embodiments in detail with reference to the accompanying drawings. Dimensional ratios in the drawings are merely examples, and there is no limitation to these. In some cases, a shape or the like in the drawing is partially emphasized for convenience of the description. In some cases, in the drawing, for ease of viewing, the reference sign is assigned only to a part of a plurality of existing portions having the same attribute.

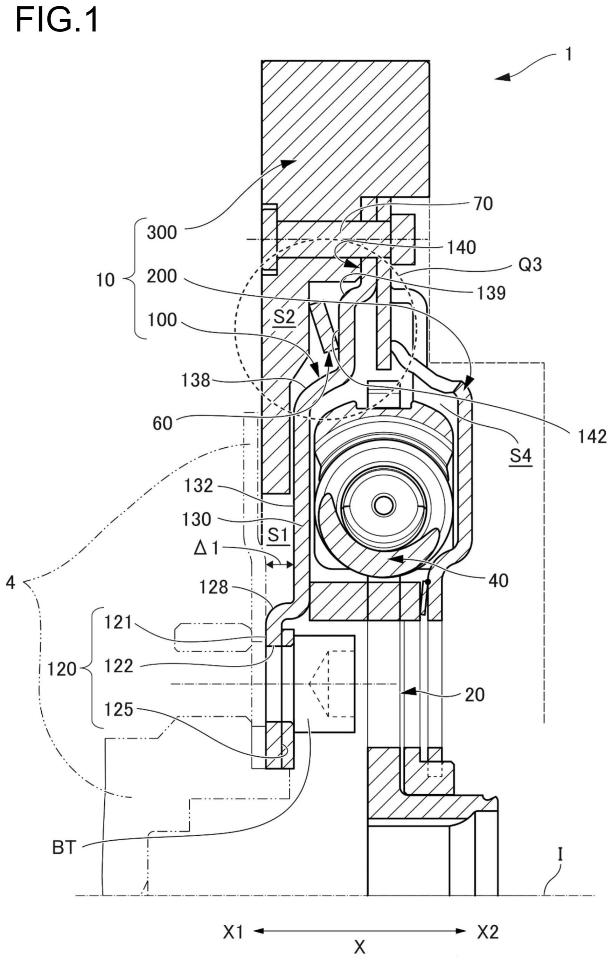

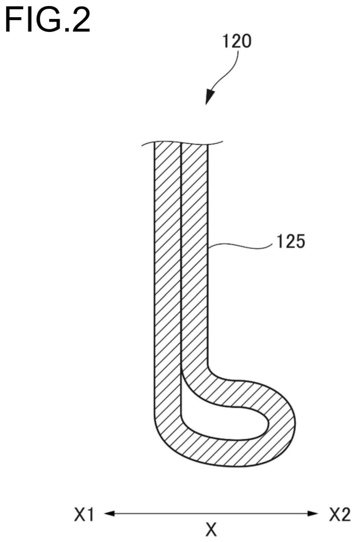

FIG. 1 is a sectional view of a damper device 1 according to this embodiment. FIG. 2 illustrates a hemmed bend structure of an attachment portion 120.

The damper device 1 is mounted on a vehicle powered by an engine (not illustrated). Alternatively, the damper device 1 may be mounted on a vehicle powered by a combination of an engine and a motor.

The damper device 1 is provided in a power transmission path from the engine to wheels. Typically, the damper device 1 is mounted at a position that is in the power transmission path from the engine to the wheels and that is on a side closest to the engine. For example, the damper device 1 includes an input end coupled to an output shaft (crankshaft) of the engine. In other words, power of the engine is input directly to the damper device 1.

In this embodiment, in one example, the damper device 1 is arranged between the engine and a transmission (not illustrated) in such a way that the power from the engine is transmitted to the transmission (not illustrated) via the damper device 1.

Herein, an X direction and an X1 side and an X2 side as both sides in the X direction are defined in FIG. 1. In the following description, the X direction refers to a direction parallel to the axis I (FIG. 1) of the output shaft of the engine, an X1 side refers to a side closer to the engine in the axial direction, and an X2 side refers to a side closer to the transmission in the axial direction.

A radial direction refers to a radial direction with respect to the axis I as the center, and a circumferential direction refers to a circumferential direction with respect to the axis I as the center.

The damper device 1 includes a first rotating member 10, a second rotating member 20, and a coil spring 40.

The power of the engine is input to the first rotating member 10. The first rotating member 10 rotates integrally with the crankshaft. The first rotating member 10 has a rotational axis concentric with the output shaft of the engine. In other words, the first rotating member 10 is rotatable around the axis I.

The second rotating member 20 has a rotational axis concentric with the output shaft of the engine. In other words, the second rotating member 20 is rotatable around the axis I. For example, the second rotating member 20 is coupled to an input side of the transmission.

The coil spring 40 is compressed between the first rotating member 10 and the second rotating member 20. The coil spring 40 may be arranged in such a way that the coil axis of the coil spring 40 is oriented in the circumferential direction. In this case, the coil spring 40 expands and contracts depending on circumferential-direction relative displacement between the first rotating member 10 and the second rotating member 20. A plurality of the coil springs 40 may be arranged at an equal interval along the circumferential direction. Two or more kinds of the coil springs may be arranged depending on a required torsion property.

Herein, details of the first rotating member 10 are further described.

The first rotating member 10 includes a first plate member 100, a second plate member 200, and an annular member 300.

The first plate member 100 is constituted by a plate material such as a metal plate. In this embodiment, in one example, the first plate member 100 is constituted by a plate material having a uniform thickness. When viewed in the X direction, the first plate member 100 has an annular shape extending around the axis I. FIG. 1 illustrates a section of the first plate member 100 at a specific circumferential-direction position (a specific angle around the axis I). However, the first plate member 100 may have the substantially equivalent section also at each of the other circumferential-direction positions. This also applies to each of the rotating members such as the second plate member 200 and the annular member 300 that are described below.

The first plate member 100 forms an engine-side attachment surface 121 perpendicular to the axis I. The first plate member 100 includes an attachment portion 120 on a radial-direction inner side. The attachment portion 120 forms the engine-side attachment surface 121. The engine-side attachment surface 121 is a surface included in the attachment portion 120 and located on an X1 side.

The attachment portion 120 includes a through-hole 122 formed for bolt fastening in such a way as to penetrate in the X direction. The number (the number along the circumferential direction) of the through-holes 122 is arbitrary. The first rotating member 10 is coupled to an engine-side member 4 by a bolt BT (only the head is illustrated) that is fastened to the attachment portion 120 of the first plate member 100. Unless otherwise particularly mentioned, the engine-side member 4 refers to an arbitrary one of various engine-related members located on an engine side of the damper device 1 in the X direction.

As illustrated in FIG. 2, the attachment portion 120 preferably has the hemmed bend structure made by a hemming process (folding-back process). In other words, the attachment portion 120 has a double-plate structure formed by folding back a plate-material edge 125. Thereby, the strength of the attachment portion 120 can be enhanced. Enhancing the strength of the attachment portion 120 can cope with a mass increase (e.g., extension of an inner diameter) of the annular member 300. Subjecting the plate material to a plurality of bending steps such as those in the hemming process achieves a smooth surface located at the bent end portion and contacting against the engine-side member 4. Thereby, scratches can be prevented from being formed at the time of assembling. The hemming process prevents a gap from occurring between the double plates, and thus, a bearing surface of the bolt BT is easily made perpendicular to the bolt axis so that bolt loosening can be reduced.

The first plate member 100 includes an intermediate portion 130 provided on a radial-direction outer side of the attachment portion 120 via a stepped portion 128.

The stepped portion 128 includes an X1-side end portion starting from a radial-direction outer end portion of the attachment portion 120, and includes an X2-side end portion terminating at a radial-direction inner end portion of the intermediate portion 130. The stepped portion 128 may be substantially parallel to the X direction, or may be inclined in such a way as to extend to a radial-direction outer side while extending to an X2 side. A corner R may be formed between the stepped portion 128 and the attachment portion 120, and a corner R may be formed between the stepped portion 128 and the intermediate portion 130. The stepped portion 128 may also be formed to include two or more steps. In other words, the stepped portion 128 may be formed to include a plurality of the steps that are connected successively to each other in the radial direction via a flat portion parallel to an offset surface 132.

The intermediate portion 130 includes the offset surface 132 (one example of "first offset surface") parallel to the engine-side attachment surface 121. The intermediate portion 130 may be formed together with the stepped portion 128 by a drawing process on the plate material for the first plate member 100. In this case, a draw depth (i.e., a length of the stepped portion 128 in the X direction) may be determined by taking into consideration the workability, the availability (a requirement for preventing interference with other members) of a space on an X2 side, and a required offset amount Δ1 between the engine-side attachment surface 121 (or the engine-side member 4) and the offset surface 132.

Herein, as the offset amount Δ1 increases, an X-direction space between the offset surface 132 of the first plate member 100 and the engine side increases. Hereinafter, the space between the offset surface 132 of the first plate member 100 and the engine side is referred to also as "inner-diameter-side space S1". The inner-diameter-side space S1 is formed on a radial-direction outer side of the attachment portion 120 in such a way as to be adjacent to the attachment portion 120.

As the inner-diameter-side space S1 increases, the below-described annular member 300 can be more easily arranged in the inner-diameter-side space S1. Further, an upper limit of an X-direction thickness of the below-described annular member 300 in the inner-diameter-side space S1 can be increased. Increasing an upper limit of an X-direction thickness of the annular member 300 enhances a degree of design freedom for a thickness of the annular member 300 in the inner-diameter-side space S1, and can thus widen an adjustment range of the inertia.

In this embodiment, the offset surface 132 is formed on the entire intermediate portion 130. However, slight unevenness or a hole in the X-direction may be formed depending on a circumferential-direction position or a radial-direction position. For example, a recess or hole to an X2 side in the X-direction may be formed in the intermediate portion 130, in an area that overlaps with the coil spring 40 when viewed in the X-direction. Alternatively, when strength of the intermediate portion 130 can be secured, a cutout may be formed in a part of the intermediate portion 130 to reduce a size in the X-direction so that the coil spring 40 is arranged partially beyond the intermediate portion 130 to an X1 side. In this case, the coil spring 40 may be arranged partially beyond the intermediate portion 130 to an X1 side, within an area (i.e., within an area for enabling a necessary clearance to be secured) in which an X1-side portion of the coil spring 40 does not contact with a radial-direction inner portion 332 of the annular member 300.

In this embodiment, the intermediate portion 130 extends from a radial-direction inner side of the coil spring 40 to a radial-direction outer side. In other words, the stepped portion 128 is located on a radial-direction inner side of the coil spring 40. Thus, the inner-diameter-side space S1 extends to reach a position on a radial-direction inner side of the coil spring 40. Thereby, an adjustment range of the inertia can be made larger than in a case where the inner-diameter-side space S1 does not reach a position on a radial-direction inner side of the coil spring 40.

In this embodiment, the intermediate portion 130 extends to reach a position on a radial-direction outer side of the coil spring 40. In other words, the intermediate portion 130 extends in the radial direction, on an X-direction X1 side of the coil spring 40, and can thus reach the position on a radial-direction outer side of the coil spring 40.

Herein, an X2-side position in the intermediate portion 130 in the X direction may be determined based on an X-direction position of the coil spring 40. When a thickness of the first plate member 100 is uniform, as an X2-side position in the intermediate portion 130 in the X direction is more shifted to an X2 side, a size of the inner-diameter-side space S1 in the X direction becomes larger. Accordingly, an X2-side position in the intermediate portion 130 in the X direction may be set in such a way as to be shifted to an X2 side to the greatest possible extent in relation to the X-direction position of the coil spring 40.

The first plate member 100 includes an outer peripheral portion 140 provided on a radial-direction outer side of the intermediate portion 130 via a stepped portion 138.

The stepped portion 138 includes an X1-side end portion starting from a radial-direction outer end portion of the intermediate portion 130, and includes an X2-side end portion terminating at a radial-direction inner end portion of the outer peripheral portion 140. The stepped portion 138 may be substantially parallel to the X direction, or may be inclined in such a way as to extend to a radial-direction outer side while extending to an X2 side. A corner R may be formed between the stepped portion 138 and the intermediate portion 130, and a corner R may be formed between the stepped portion 138 and the outer peripheral portion 140.

A height (a size in the X direction) of the stepped portion 138 is arbitrary, but may be determined based on a diameter of the coil spring 40. For example, a height of the stepped portion 138 may be set to be smaller than a coil radius of the coil spring 40 and larger than a height of the stepped portion 128.

The outer peripheral portion 140 includes an engine-side surface 142 (one example of a second offset surface) parallel to the engine-side attachment surface 121. The outer peripheral portion 140 may include an additional stepped portion 139 on a radial-direction outer side, in addition to the above-described stepped portion 138. The outer peripheral portion 140 may be formed together with the stepped portion 138 (and the stepped portion 139) by a drawing process on the plate material of the first plate member 100. In this case, a draw depth (i.e., a length of the stepped portion 138 and the like in the X direction) may be determined taking into consideration the workability and the availability of a space on an X2 side. A total height (a size in the X-direction) of the stepped portion 138 and the stepped portion 139 may be substantially equal to the coil radius of the coil spring 40.

Similarly to the case of the inner-diameter-side space S1, a space (hereinafter, referred to as "outer-diameter-side space S2") between the outer peripheral portion 140 and an engine side can be used as a space for arranging the below-described annular member 300. In this case, as a size of the outer-diameter-side space S2 in the X direction increases, the annular member 300 having a large size in the X direction can be more easily arranged. In other words, an upper limit of an X-direction thickness of the below-described annular member 300 in the outer-diameter-side space S2 can be increased. Increasing an upper limit of an X-direction thickness of the annular member 300 enhances design freedom for a thickness of the annular member 300 in the outer-diameter-side space S2, and can thus widen an adjustment range of the inertia.

In this embodiment, as described above, the intermediate portion 130 extends to reach a position on a radial-direction outer side of the coil spring 40. Accordingly, the outer peripheral portion 140 extends to a radial-direction outer side from a position on a radial-direction outer side of the coil spring 40. In other words, the stepped portion 138 is located on a radial-direction outer side of the coil spring 40.

The second plate member 200 is constituted by a plate material equivalent to that of the first plate member 100. The second plate member 200 is located on an X2 side of the first plate member 100. The second plate member 200 is arranged in relation to the first plate member 100 in such a way that the coil spring 40 and the second rotating member 20 are located between the second plate member 200 and the first plate member 100 in the X direction. In other words, the second plate member 200 forms an arrangement space S4 between the second plate member 200 and the first plate member 100 in the X direction. In the arrangement space S4, the second rotating member 20 and the coil spring 40 are arranged.

When viewed in the X direction, the annular member 300 has an annular shape whose center is the axis I. The annular member 300 may have a shape that is line-symmetric with respect to any line passing through the axis I, when viewed in the X direction.

The annular member 300 is attached to the first plate member 100, and rotates integrally with the first plate member 100. The annular member 300 is fixed to the outer peripheral portion 140 of the first plate member 100 by a coupling member 70.

The annular member 300 has the mass sufficient for securing the required inertia of the first rotating member 10. The mass of the annular member 300 is set appropriately depending on the required inertia of the first rotating member 10. The inertia is one of parameters that determine a natural frequency of the damper device 1.

In this embodiment, as described above, a relatively wide inner-diameter-side space S1 is formed. For this reason, an adjustment range of the inertia (and the natural frequency) achieved by an arrangement method for the annular member 300 can be effectively increased.

Specifically, as illustrated in FIG. 1, the radial-direction inner portion 332 of the annular member 300 extends into the inner-diameter-side space S1. In other words, when viewed in the X direction, the annular member 300 overlaps with the intermediate portion 130 (offset surface 132). Thereby, the maximum mass that the annular member 300 can be made to have can be increased as compared to a configuration without the radial-direction inner portion 332. In other words, an upper limit of an adjustment range of the inertia achieved by an arrangement method for the annular member 300 can be effectively increased.

In the example illustrated in FIG. 1, the annular member 300 extends into the inner-diameter-side space S1 and the outer-diameter-side space S2. In this case, an X-direction thickness of a part included in the annular member 300 and extending in the outer-diameter-side space S2 is significantly larger than an X-direction thickness of a part included in the annular member 300 and extending in the inner-diameter-side space S1. An X-direction thickness of the annular member 300 increases toward a radial-direction outer side, in a stepped portion corresponding to the stepped portion 138. Thereby, the mass of the annular member 300 can be efficiently increased.

In the example illustrated in FIG. 1, the annular member 300 is provided in such a way as to occupy a part (a radial-direction outer part) in the inner-diameter-side space S1. However, the annular member may be provided in such a way as to occupy the entire inner-diameter side space S1.

Thus, according to this embodiment, using the relatively large inner-diameter-side space S1 can reduce a part that is included in the annular member 300 and that could occupy another space. For example, decreasing an outer diameter of the annular member 300 can reduce a body size of the first rotating member 10 in the radial direction, resulting in a reduction in a body size of the damper device 1 in the radial direction.

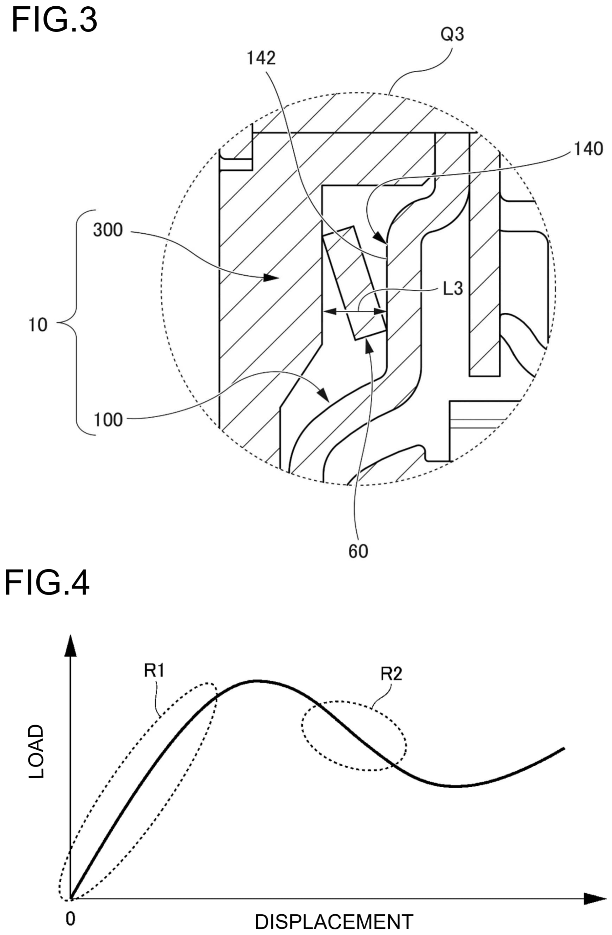

Next, further configuration features in this embodiment are described with reference to FIG. 3 and subsequent figures.

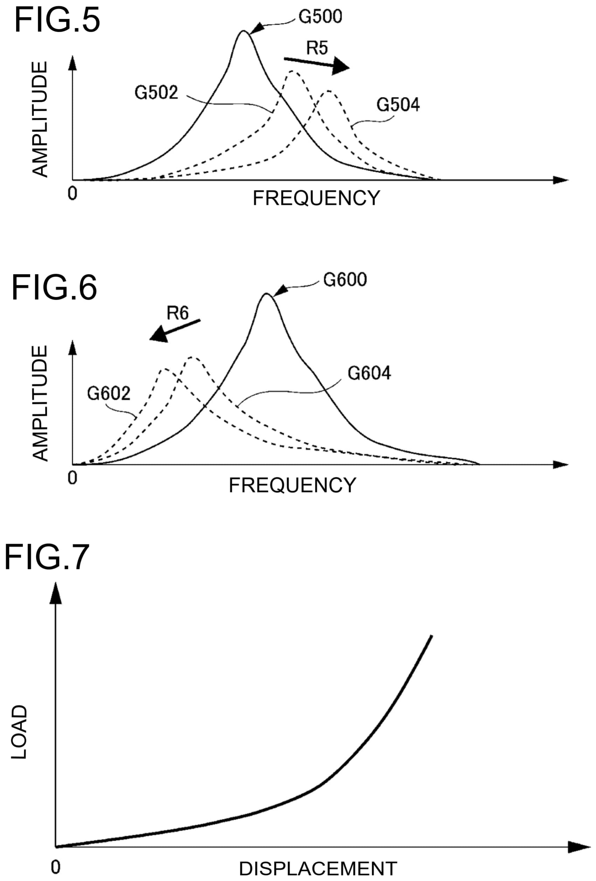

FIG. 3 is an enlarged view of the portion Q3 in FIG. 1. FIG. 4 illustrates one example of a property of an elastic body 60. FIG. 5 illustrates a manner in which the natural frequency is changed (adjusted) in an increasing direction. FIG. 6 illustrates a manner in which the natural frequency is changed (adjusted) in a decreasing direction. FIG. 7 illustrates another example of a property of the elastic body 60.

In this embodiment, the damper device 1 further includes the elastic body 60 between the first plate member 100 and the annular member 300. The elastic body 60 has elasticity in the X direction.

In this embodiment, the elastic body 60 is provided for the first plate member 100 in such a way that an X2-side end portion contacts with the engine-side surface 142 of the outer peripheral portion 140. In this case, the elastic body 60 expands and contracts in the X direction, depending on a fluctuation in an X-direction dimension L3 between the annular member 300 and the engine-side surface 142 of the outer peripheral portion 140.

Thus, according to this embodiment, installing the elastic body 60 between the annular member 300 and the first plate member 100 enables the entire rigidity (i.e., the natural frequency) of the damper device 1 to be changed.

Specifically, the natural frequency f of the damper device 1 can be expressed by the following equation.$f = 1 / 2 π \times {\left(k1/m+k2/m\right)}^{1 / 2}$

Herein, k1 represents an elastic coefficient of the damper device 1 excluding the elastic body 60, and k2 represents an elastic coefficient of the elastic body 60. Further, m represents the entire mass of the damper device 1. As can be understood from the above equation, the natural frequency f can be efficiently changed by adjusting the elastic coefficient k2 of the elastic body 60.

Hereinafter, the natural frequency when the elastic body 60 is not provided is referred to also as a base natural frequency f0 (= 1/2π × (k1/m)^{1/2}).

The elastic body 60 may have an arbitrary shape. When viewed in the X direction, the elastic body 60 may have an annular shape whose center is the axis I. The annular member 300 may have the shape that is line-symmetric with respect to any line passing through the axis I, when viewed in the X direction. Thereby, a radial-direction inner-side position (radial-direction position) of the elastic body 60 is defined by the stepped portion 138. Thus, undesirable displacement (displacement from a desired position) of the elastic body 60 can be suppressed.

The elastic body 60 may have a shape of a disc spring, for example. In this case, as illustrated in FIG. 4, the elastic body 60 has, as the property of the load with respect to displacement in the X direction, a property (one example of "first property") that the load of the elastic body 60 increases and then decreases as the displacement of the elastic body 60 increases.

When the elastic body 60 having the property illustrated in FIG. 4 is used, the natural frequency f can be set to be either larger than or smaller than the base natural frequency f0.

Specifically, when the elastic body 60 is arranged in such a way that a used region in the property illustrated in FIG. 4 becomes the region R1 in which the load increases as the displacement increases, the natural frequency f (refer to the waveform G502 or G504) can be made larger than the base natural frequency f0 (refer to the waveform G500) as schematically indicated by the arrow R5 in FIG. 5.

Meanwhile, when the elastic body 60 is arranged in such a way that a used region in the property illustrated in FIG. 4 becomes the region R2 in which the load decreases as the displacement increases, the natural frequency f (refer to the waveform G602 or G604) can be made smaller than the base natural frequency f0 (refer to the waveform G600), as schematically indicated by the arrow R6 in FIG. 6. This arrangement (setting) can be achieved by the setting in which an initial deformed amount of the elastic body 60 in a nominal state (a state in which the above-described dimension L3 is the normalized value) is made relatively large.

Alternatively, as illustrated in FIG. 7, the elastic body 60 may have, as the property of the load with respect to the displacement in the X direction, a property (one example of "second property") that the load of the elastic body 60 increases as the displacement of the elastic body 60 increases. In other words, differently from the property illustrated in FIG. 4, the elastic body 60 may have the property that the load increases monotonically as the displacement increases. Such property can be achieved, for example, by a configuration (not illustrated) in which the elastic body 60 has a uniform section (a uniform section when viewed as a section taken along a plane including the axis I) while an X-direction central position (a central position of the section in a state before the elastic deformation) periodically vary along the circumferential direction. For example, such property can be achieved by the elastic body 60 including a crest portion and a valley portion that are alternately arranged in the circumferential direction. At the crest portions, the above-described X-direction central position is most shifted to an X1 side. At the valley portions, the above-described X-direction central position is most shifted to an X2 side.

When the elastic body 60 having the property illustrated in FIG. 7 is used, the natural frequency f can be made larger than the base natural frequency f0.

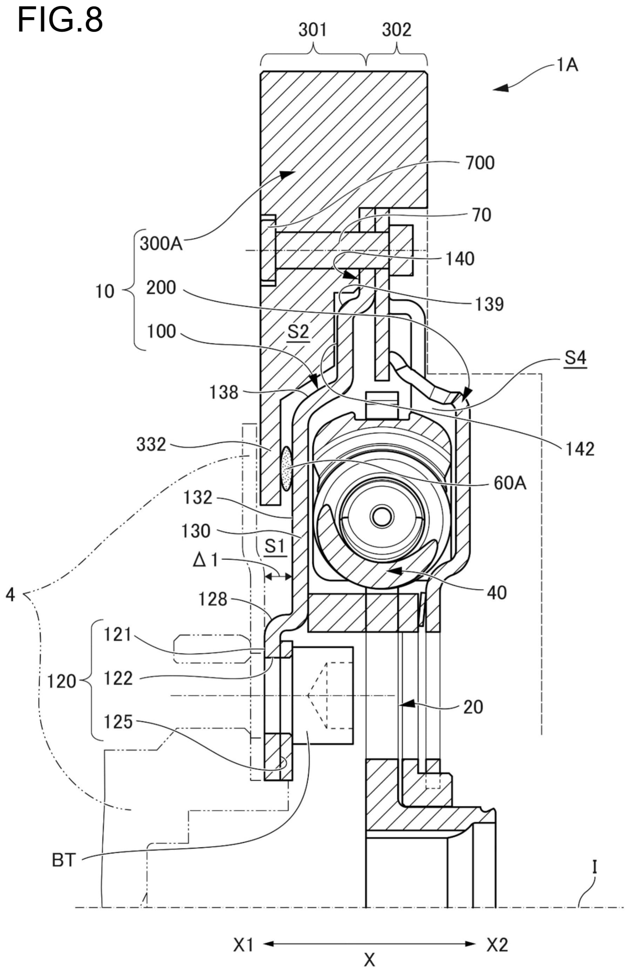

Next, a modified example of the above-described embodiment is described with reference to FIG. 8. In the following description of the modified example, constituents that may be equivalent to those in the above-described embodiment are denoted by the same reference signs, and the description of these constituents are omitted.

FIG. 8 is an illustration of a damper device 1A according to the modified example. The damper device 1A according to the modified example differs from the damper device 1 according to the above-described embodiment in that the elastic body 60 is replaced with an elastic body 60A.

A position of the elastic body 60A differs from that of the elastic body 60 according to the above-described embodiment.

Specifically, in the above-described embodiment, the elastic body 60 is provided for the first plate member 100 in such a way that the X2-side end portion of the elastic body 60 contacts with the engine-side surface 142 of the outer peripheral portion 140. Meanwhile, in this modified example, the elastic body 60A is provided for the first plate member 100 in such a way that an X2-side end portion of the elastic body 60A contacts with the offset surface 132 of the intermediate portion 130. In this case, the elastic body 60A expands and contracts in the X direction, depending on a fluctuation in an X-direction size of a gap between an annular member 300A and the offset surface 132 of the intermediate portion 130.

This modified example also achieves the effects equivalent to those in the above-described embodiment. In other words, installing the elastic body 60A between the annular member 300A and the first plate member 100 enables the entire rigidity (i.e., the natural frequency) of the damper device 1A to be changed.

As described above, such an elastic body may be arranged at any position between the first plate member 100 and the annular member 300 (or 300A) in the axial direction.

In another modified example, the elastic body 60 as well as the elastic body 60A may be arranged. In other words, the elastic body 60 and the elastic body 60A may be used in combination.

Although each embodiment is described above in detail, this disclosure is not limited to the specific embodiment, and various modifications and alterations can be made within the scope described in Claims. All or a plurality of the constituents of the above-described embodiments can be combined.

Further, the following discloses Supplementary Notes, concerning each of the above-described embodiments.

### [Supplementary Note 1]

A damper device including:
a first rotating member to which power of an engine is input and that is rotatable around a rotational axis extending in an axial direction;
a second rotating member that is rotatable around the rotational axis relative to the first rotating member; and
a coil spring that is compressed between the first rotating member and the second rotating member, wherein
the first rotating member includes:
   a plate member that rotates integrally with an engine-side member;
   an annular member that has an annular shape around the rotational axis when viewed in the axial direction and that is coupled to the plate member; and
   an elastic body that is provided between the plate member and the annular member in the axial direction and has elasticity in the axial direction.

### [Supplementary Note 2]

The damper device according to Supplementary Note 1, wherein
the plate member forms, on an engine side in the axial direction,
an engine-side attachment surface perpendicular to the rotational axis,
a first offset surface that is offset in the axial direction from the engine-side attachment surface to a side separated from the engine, and
a second offset surface that is offset in the axial direction from the first offset surface to a side separated from the engine,
a radial-direction area of the first offset surface includes an area being on a radial-direction outer side of the engine-side attachment surface and on a radial-direction inner side of the coil spring,
a radial-direction area of the second offset surface includes an area being on a radial-direction outer side of the first offset surface and on a radial-direction outer side of the coil spring, and
the elastic body is provided in such a way as to contact with the first offset surface or the second offset surface.

### [Supplementary Note 3]

The damper device according to Supplementary Note 2, wherein
the elastic body has an annular shape around the rotational axis.

### [Supplementary Note 4]

The damper device according to Supplementary Note 3, wherein
the elastic body has, as a property of a load with respect to displacement in the axial direction, a first property that the load increases and then decreases as the displacement increases, or a second property that the load increases monotonically as the displacement increases.

### [Supplementary Note 5]

The damper device according to any one of Supplementary Notes 2 to 4, wherein
the radial-direction area of the first offset surface further includes a radial-direction area that overlaps with the coil spring when viewed in the axial direction.

### [Supplementary Note 6]

The damper device according to any one of Supplementary Notes 2 to 5, wherein
the first offset surface extends to a position closer to the engine in the axial direction than the coil spring.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A damper device (1) comprising:
a first rotating member (10) to which power of an engine is input and that is rotatable around a rotational axis (I) extending in an axial direction;
a second rotating member (20) that is rotatable around the rotational axis (I) relative to the first rotating member (10); and
a coil spring (40) that is compressed between the first rotating member (10) and the second rotating member (20), wherein
the first rotating member (10) includes:
a plate member (100) that rotates integrally with an engine-side member (4);
an annular member (300) that has an annular shape around the rotational axis (I) when viewed in the axial direction and that is coupled to the plate member (100); and
an elastic body (60) that is provided between the plate member (100) and the annular member (300) in the axial direction and has elasticity in the axial direction.

2. The damper device (1) according to Claim 1, wherein
the plate member (100) forms, on an engine side in the axial direction,
an engine-side attachment surface (121) perpendicular to the rotational axis (I),
a first offset surface (132) that is offset in the axial direction from the engine-side attachment surface (121) to a side separated from the engine, and
a second offset surface (142) that is offset in the axial direction from the first offset surface (132) to a side separated from the engine,
a radial-direction area of the first offset surface (132) includes an area being on a radial-direction outer side of the engine-side attachment surface (121) and on a radial-direction inner side of the coil spring (40),
a radial-direction area of the second offset surface (142) includes an area being on a radial-direction outer side of the first offset surface (132) and on a radial-direction outer side of the coil spring (40), and
the elastic body (60) is provided in such a way as to contact with the first offset surface (132) or the second offset surface (142).

3. The damper device (1) according to Claim 1 or 2, wherein
the elastic body (60) has an annular shape around the rotational axis (I).

4. The damper device (1) according to any one of Claims 1 to 3, wherein
the elastic body (60) has, as a property of a load with respect to displacement in the axial direction, a first property that the load increases and then decreases as the displacement increases, or a second property that the load increases monotonically as the displacement increases.
